# EUROPEAN PATENT APPLICATION

(11) **EP 4 557 855 A1**
(43) Date of publication of application: **21.05.2025**
(21) Application number: 22950522.7
(22) Date of filing: 11.07.2022
(51) Int. Cl.: H04W 72/04, H04W 24/08, H04W 24/10, H04W 84/12

(54) **SENSING BY PROXY MEASUREMENT METHOD AND APPARATUS**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2022/105016
(87) International publication number: WO 2024/011391

(57) **Abstract**

A sensing by proxy (SBP) measurement method and apparatus. The SBP measurement method comprises: sending an SBP request frame to an SBP response end (101); and sending a wireless frame to a first response end in the SBP response end; wherein the wireless frame is used for instructing the first response end, as a proxy of an SBP initiating end, to establish wireless local area network (WLAN) sensing measurement, and the wireless frame comprises an acknowledgement (ACK) message frame or an SBP ACK frame (102). The SBP initiating end sends the wireless frame to the first response end in the SBP response end to establish an SBP process, thereby avoiding the waste of invalid message frames and perfecting an SBP establishment mechanism so that the SBP establishment mechanism is suitable for WLAN sensing measurement.

## Description

### TECHNICAL FIELD

Embodiments of the present disclosure relate to the field of mobile communication technology, and in particular, to a sensing by proxy method and device.

### BACKGROUND

With the rapid development of mobile communication technology, the wireless fidelity (Wi-Fi, Wifi, or WiFi) technology has made great progress in terms of transmission rate, throughput or the like. Currently, what are studied in the Wi-Fi technology are for example 320 Mhz bandwidth transmission, multi-band aggregation and collaboration or the like, and the main application scenarios of the Wi-Fi technology are for example video transmission, augmented reality (AR), virtual reality (VR) or the like.

Specifically, the multi-band aggregation and collaboration refers to that the communication between devices is performed in 2.4GHz, 5.8GHz, 6GHz and other frequency bands at the same time. As for the scenario where the communication between devices is performed in a plurality of frequency bands at the same time, a new media access control (MAC) mechanism may be defined for management thereof. In addition, the multi-band aggregation and collaboration is expected to support low-latency transmission.

Currently, the multi-band aggregation and collaboration technology supports a maximum bandwidth of 320MHz (160MHz+160MHz), and may also support a bandwidth of 240MHz (160MHz+80MHz) and other bandwidths supported by an existing standard.

The Wi-Fi technology studied currently may support a wireless local area network (WLAN) sensing technology, which for example may be applied in scenarios such as position detection, proximity detection and presence detection in a dense environment (e.g., home and company environments). During the WLAN sensing, the identities of a station (STA) and an access point (AP) are interchangeable, for example, both the STA and the AP may act as an initiator device (a sensing initiator or sensing transmitter). When acting as the sensing initiator or sensing transmitter, the AP may communicate with a plurality of STAs at the same time, but the STA does not have such capability, and may only communicate with a single sensing responder, which, on the one hand, may cause a waste of spectrum resources, and on the other hand, may cause an increase in latency, thereby not satisfying a latency requirement in a communication scenario with a high latency requirement. In order to solve such problem, it proposes using the AP as a proxy of the STA to perform the WLAN sensing measurement, i.e., a sensing by proxy (SBP) measurement. How the SBP process is established between an SBP initiator and an SBP responder still needs to be further determined.

### SUMMARY

Embodiments of the present disclosure provides a sensing by proxy method and device, so as to provide a way of establishing an SBP process between an SBP initiator and an SBP responder.

In an aspect, an embodiment of the present disclosure provides a method for sensing by proxy, performed by a sensing by proxy (SBP) measurement initiator, and including:
sending an SBP request frame to SBP responders; and
sending a radio frame to a first responder of the SBP responders, wherein the radio frame indicates the first responder to be used as a proxy of an SBP initiator to establish a wireless local area network (WLAN) sensing measurement, and the radio frame includes an acknowledgement (ACK) frame or an SBP confirmation frame.

In another aspect, an embodiment of the present disclosure further provides a method for sensing by proxy, performed by a first responder of sensing by proxy (SBP) measurement responders, and including:
receiving a radio frame sent by an SBP initiator, wherein the radio frame indicates the first responder to be used as a proxy of the SBP initiator to establish a wireless local area network (WLAN) sensing measurement, and the radio frame includes an acknowledgement (ACK) frame or an SBP confirmation frame; and
establishing the WLAN sensing measurement.

In another aspect, an embodiment of the present disclosure further provides a communication device, including:
a sending module, configured to send an SBP request frame to SBP responders; and
the sending module is configured to send a radio frame to a first responder of the SBP responders, wherein the radio frame indicates the first responder to be used as a proxy of an SBP initiator to establish a wireless local area network (WLAN) sensing measurement, and the radio frame includes an acknowledgement (ACK) frame or an SBP confirmation frame.

In another aspect, an embodiment of the present disclosure further provides a communication device, including:
a receiving module, configured to receive a radio frame sent by an SBP initiator, wherein the radio frame indicates a first responder to be used as a proxy of the SBP initiator to establish a wireless local area network (WLAN) sensing measurement, and the radio frame includes an acknowledgement (ACK) frame or an SBP confirmation frame; and
a processing module, configured to establish the WLAN sensing measurement.

An embodiment of the present disclosure further provides a communication device, including a memory, a processor and a computer program stored in the memory and runnable on the processor, and the processor, when executing the program, implements the method according to one or more of the embodiments of the present disclosure.

An embodiment of the present disclosure further provides a computer-readable storage medium having a computer program stored thereon, and the computer program, when being executed by a processor, implements the method according to one or more of the embodiments of the present disclosure.

In the embodiments of the present disclosure, the SBP initiator sends the radio frame to the first responder of the SBP responders to establish an SBP process, which avoids waste due to invalid message frames and improves the SBP establishment mechanism to be suitable for the WLAN sensing measurement.

Additional aspects and advantages of the embodiments of the present disclosure will be partially given in the following description, which will become apparent from the following description or be learned through the practice of the present disclosure.

### BRIEF DESCRIPTION OF THE DRAWINGS

In order to more clearly illustrate the technical solutions of the embodiments of the present disclosure, the accompanying drawings, which are to be used in the description of the embodiments of the present disclosure, will be briefly introduced below. Obviously, the accompanying drawings in the following description are only some of the embodiments of the present disclosure, and a person skilled in the art may obtain other drawings based on these drawings without creative labor.
FIG. 1 illustrates a flowchart of a sensing by proxy method according to an embodiment of the present disclosure;
FIG. 2 illustrates a schematic diagram of a first example according to an embodiment of the present disclosure;
FIG. 3 illustrates another schematic diagram of the first example according to an embodiment of the present disclosure;
FIG. 4 illustrates yet another schematic diagram of the first example according to an embodiment of the present disclosure;
FIG. 5 illustrates a schematic diagram of a second example according to an embodiment of the present disclosure;
FIG. 6 illustrates another flowchart of a sensing by proxy method according to an embodiment of the present disclosure;
FIG. 7 illustrates yet another flowchart of a sensing by proxy method according to an embodiment of the present disclosure;
FIG. 8 illustrates a schematic structure diagram of a communication device according to an embodiment of the present disclosure;
FIG. 9 illustrates another schematic structure diagram of a communication device according to an embodiment of the present disclosure; and
FIG. 10 illustrates yet another schematic structure diagram of a communication device according to an embodiment of the present disclosure.

### DETAILED DESCRIPTION

The term "and/or" in the embodiments of the present disclosure describes an association relationship between associated objects, indicating that three relationships may exist, for example, A and/or B may indicate: A alone, both A and B, and B alone. The character "/" generally indicates that the associated objects before and after the character are in an "or" relationship.

The term "a plurality of ......" in the embodiments of the present disclosure refers to two or more, and other quantifiers have similar meanings.

Exemplary embodiments will be described in detail herein, examples of which are shown in the accompanying drawings. When the following description relates to the accompanying drawings, unless otherwise indicated, the same reference numbers in different drawings indicate the same or similar elements. The implementations described in the following exemplary embodiments do not represent all implementations consistent with the present disclosure. Rather, they are merely examples of devices and methods consistent with some aspects of the present disclosure as detailed in the appended claims.

The term used in the present disclosure is only for describing a particular embodiment and is not intended to limit the present disclosure. The singular forms such as "a", "an", "said" and "the" used in the present disclosure and the appended claims are also intended to encompass plural forms, unless clearly indicated otherwise herein. It is also to be understood that the term "and/or" as used herein refers to and encompasses any or all possible combinations of one or more of the associated listed items.

It is to be understood that while the terms first, second, third or the like may be used in the present disclosure to describe various information, such information may not be limited by these terms. These terms are used only to distinguish the same type of information from one another. For example, without departing from the scope of the present disclosure, first information may also be referred to as second information, and similarly, second information may be referred to as first information. Depending on the context, for example, the term "if" as used herein may be interpreted as "while ......" or "when ......" or "in response to determining ......".

The technical solution in the embodiments of the present disclosure will be described clearly and completely hereinafter in conjunction with the accompanying drawings in the embodiments of the present disclosure. Obviously, the described embodiments are only a part but not all of the embodiments of the present disclosure. Based on the embodiments in the present disclosure, all other embodiments obtained by a person skilled in the art without making creative labor fall within the protection scope of the present disclosure.

An embodiment of the present disclosure provides a sensing by proxy method and device, in order to provide a way of establishing an SBP process between an SBP initiator and an SBP responder.

The method and the device are based on the same inventive concept. Since the method and the device solve the problem with similar principles, the implementations of the device and the method may be referred to each other, and the repetition thereof will not be described.

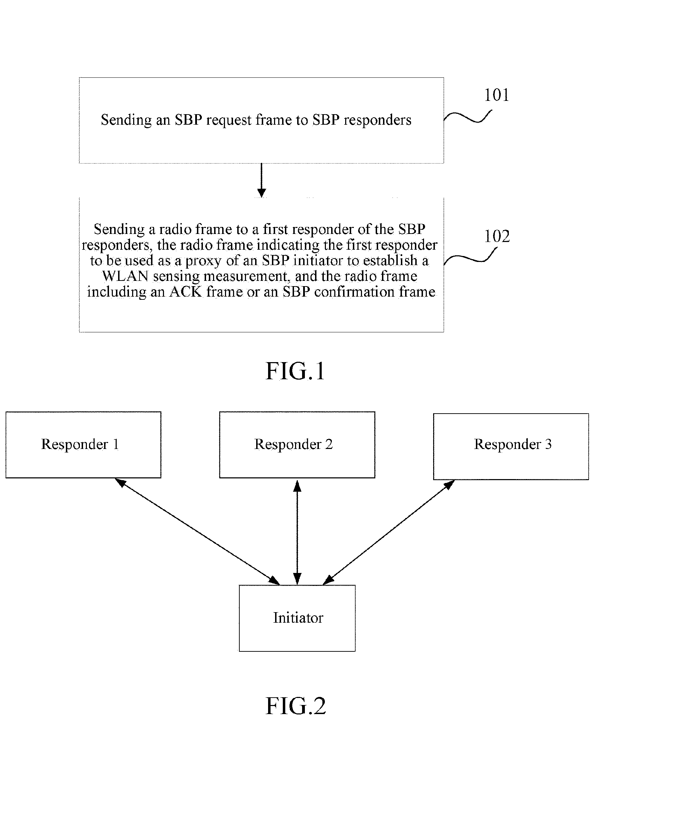

As shown in FIG. 1, an embodiment of the present disclosure provides a sensing by proxy method, optionally, the method may be performed by a sensing by proxy (SBP) measurement initiator (hereinafter referred to as an SBP initiator), and the SBP initiator may be a station (STA), and the method may include the following steps.

In step 101, an SBP request frame is sent to SBP responders.

As a first example, referring to FIGS. 2 to 4, a WLAN sensing architecture applied by the sensing by proxy method provided by the embodiment of the present disclosure and a WLAN sensing process thereof are described firstly.

FIG. 2 illustrates a schematic architecture diagram of a WLAN sensing (process) in which a sensing initiator (or initiator) initiates a WLAN sensing (e.g., initiates a WLAN sensing session), and there may be a plurality of sensing responders (or sensing receivers) or responders responding thereto, for example, responder 1, responder 2, and responder 3 in FIG. 2. When the sensing initiator initiates the WLAN sensing, a plurality of associated or unassociated sensing responders of the WLAN sensing may respond thereto.

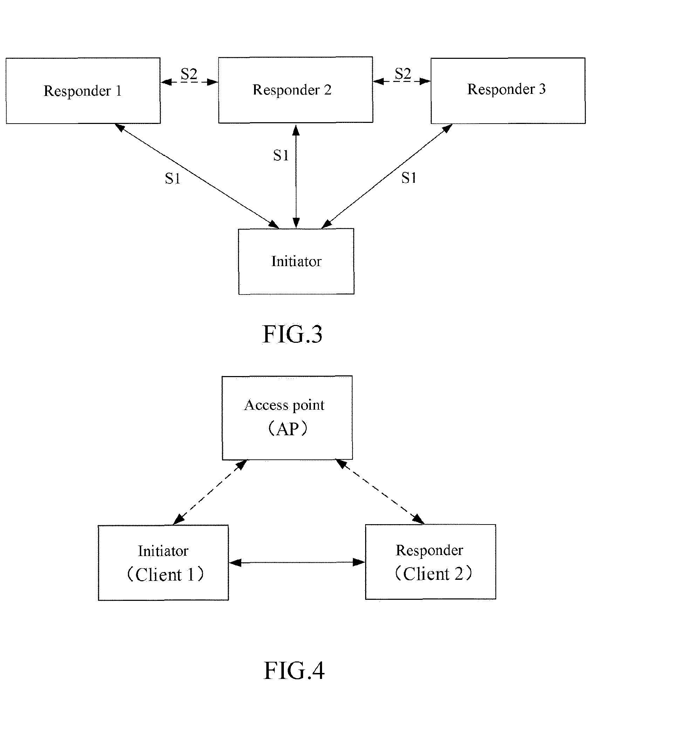

Referring to FIG. 3, the sensing initiator and the sensing responder communicate with each other via a communication connection, such as a communication connection S1 shown, and the sensing responders communicate with each other via a communication connection S2.

Each sensing initiator may be a client, and each sensing responder (in this example, i.e., the sensing responders 1 to 3) may be a station (STA) or an access point (AP). In addition, the STA and the AP may act as a plurality of roles in the WLAN sensing process. For example, in the WLAN sensing process, the STA may also act as a sensing initiator, which may be a sensing transmitter, a sensing receiver, or both, or neither. In the WLAN sensing process, the sensing responder may also be a sensing transmitter, a sensing receiver, or both.

As another architecture, as shown in FIG. 4, the sensing initiator and sensing responder may also both be clients, and may communicate with each other by connecting to a same access point (AP). In FIG. 4, the client 1 is a sensing initiator, and the client2 is a sensing responder.

Generally, when acting as a sensing initiator or a sensing transmitter, the STA does not have the capability of communicating with a plurality of receivers at the same time, so it needs a proxy device (a SBP responder, for example, an AP) as a proxy of the STA to perform the sensing measurement in order to improve the efficiency of the sensing measurement. In the process of initiating SBP, the SBP initiator sends an SBP request frame (SBP request) to the SBP responder (e.g., an AP). The SBP request frame is a broadcast message frame, and a plurality of SBP responders may receive the SBP request frame, and then respond to the SBP initiator with an SBP response frame.

In step 102, a radio frame is sent to a first responder of the SBP responders. The radio frame indicates the first responder to be used as a proxy of the SBP initiator to establish a wireless local area network (WLAN) sensing measurement, and the radio frame includes an acknowledgement (ACK) frame or an SBP confirmation frame.

The SBP initiator, upon receiving SBP response frames sent by at least two of the SBP responders, simply sends the radio frame to one first responder of the at least two of the SBP responders to indicate the first responder to be used as the proxy of the SBP initiator to establish the WLAN sensing measurement. The radio frame includes the ACK frame or the SBP confirmation frame (SBP confirmation).

In this way, after the SBP initiator sends the SBP request frame in the form of broadcasting, a plurality of SBP responders may respond thereto, and the SBP initiator may receive a plurality of SBP response frames. However the SBP initiator only needs one of the SBP responders to establish one SBP, resulting in a large number of invalid SBP response frames and thus a waste of network resources. In addition, for example, within 10 ms after the SBP responder feeds back the SBP response, the SBP SBP initiator receives the SBP response frame, and may feed back the ACK frame or SBP confirmation frame to the SBP responder. If the SBP responder does not receive a confirmation from the SBP initiator, the SBP responder may consider that the SBP establishment is completed, affecting other subsequent signaling interaction. Therefore, in the embodiment of the present disclosure, the SBP initiator sends the radio frame to one first responder of the SBP responders to establish one SBP process, to avoid the waste due to the invalid message frames, and improve the SBP establishment mechanism to be suitable for the WLAN sensing measurement.

Further, the SBP responder acts as the SBP proxy to initiate the WLAN sensing measurement, and the initiated WLAN sensing measurement is a triggered based sounding (TB) sensing measurement. The TB sensing measurement is divided into an NDPA sounding (downlink (DL)) sensing and a trigger frame sounding (uplink (UL)) process.

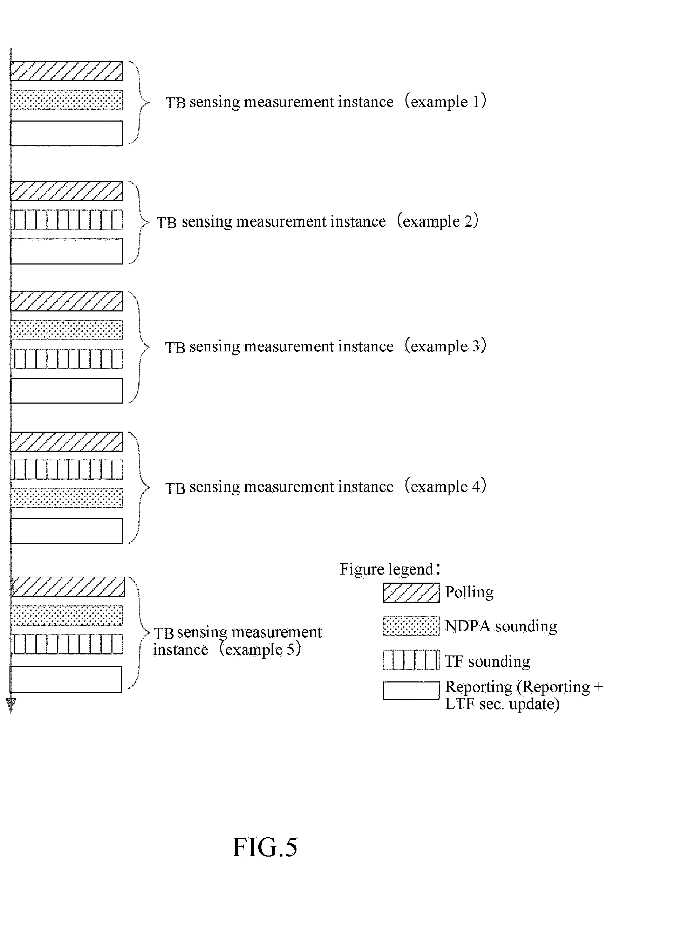

The WLAN sensing process usually includes a triggered based sounding (TB) manner and a Non-TB based sensing manner. Specifically, the TB sensing measurement manner is a manner in which the AP is the initiator or transmitter, and the Non-TB sensing measurement manner is a manner in which the STA is the initiator or transmitter. As a second example, the TB sensing measurement process is illustrated in FIG. 5. FIG. 5 illustrates a plurality of sensing measurement instances of the sensing measurement in the TB sensing measurement process. In examples 1 to 5, each sensing measurement process includes polling, sounding, and reporting (reporting + LTF sec. update) processes. In each example, the sounding may include only NDPA sounding or only TF sounding or both thereof, and the SBP initiator may participate in the NDPA sounding process.

An embodiment of the present disclosure also provides a sensing by proxy method, optionally the method may be performed by a sensing by proxy (SBP) measurement initiator, the SBP initiator may be a station (STA), and the method may include:
sending an SBP request frame to SBP responders, wherein the SBP request frame includes parameter information for establishing a WLAN sensing measurement, the first responder is an SBP responder that satisfies the parameter information, the parameter information is, for example, a number of spatial streams (NSS), a bandwidth (BW) parameter, the number of STAs participating in the sensing measurement or the like, the SBP responder, when determining that it satisfies the parameter requirement, respond to the SBP initiator with an SBP response frame, and then the SBP initiator selects one of the SBP responders responding with the SBP response frame as the first responder; and
sending a radio frame to a first responder of the SBP responders, wherein the radio frame indicates the first responder to be used as a proxy of the SBP initiator to establish the WLAN sensing measurement, and the radio frame includes an acknowledgement (ACK) frame or an SBP confirmation frame.

An embodiment of the present disclosure also provides a sensing by proxy method, optionally the method may be performed by a sensing by proxy (SBP) measurement initiator, the SBP initiator may be a station (STA), and the method may include:
sending an SBP request frame to SBP responders; and
sending a radio frame to a first responder of the SBP responders, wherein the radio frame indicates the first responder to be used as a proxy of the SBP initiator to establish a wireless local area network (WLAN) sensing measurement, and the radio frame includes an acknowledgement (ACK) frame or an SBP confirmation frame.

The SBP confirmation frame includes a category field, a public action field, and a dialog token field. As a third example, the format of the SBP confirmation frame is as shown in Table 1 below.

**Table 1:**

| | | |
|---|---|---|
| Category | Public action | Dialog token (Dialog token/MSID) |

A value of the public action field is configured to identify that the radio frame is the SBP confirmation frame.

The dialog token field includes a measurement setup identification (MSID) identification bit and a dialog token identification bit.

The SBP initiator and the SBP responder may establish a plurality of SBP processes at the same time in a very short period of time, so that the dialog token field includes the MSID to identify a corresponding measurement setup. The value in the dialog token identification bit is the same as a dialog token value of the SBP request frame and a dialog token value of an SBP response frame sent by the SBP responder, that is, the value in the dialog token identification bit is the same as the value of the dialog token of the SBP request frame and the value of the dialog token of the SBP response frame.

An embodiment of the present disclosure also provides a sensing by proxy method, optionally the method may be performed by a sensing by proxy (SBP) measurement initiator, the SBP initiator may be a station (STA), and the method may include:
sending an SBP request frame to SBP responders;
determining that an SBP response frame is not received within a first time range, and terminating an SBP measurement; and
if the SBP response frame is received within the first time range, sending a radio frame to a first responder of the SBP responders sending the SBP response frame, wherein the radio frame indicates the first responder to be used as a proxy of an SBP initiator to establish a wireless local area network (WLAN) sensing measurement, and the radio frame includes an acknowledgement (ACK) frame or an SBP confirmation frame.

The first time range exists between the sending of the SBP request and the receiving of the SBP response. If no SBP response is received in the first time range, the termination of the SBP process is identified, and if the SBP response is received, the radio frame is sent to one first responder of the SBP responders sending the SBP response frame to continue the SBP process.

In the embodiments of the present disclosure, the SBP initiator sends the radio frame to the first responder of the SBP responders to establish an SBP process, which avoids waste due to invalid message frames and improves the SBP establishment mechanism to be suitable for the WLAN sensing measurement. The embodiments of the present disclosure provide a way of establishing a SBP process between the SBP initiator and the SBP responder.

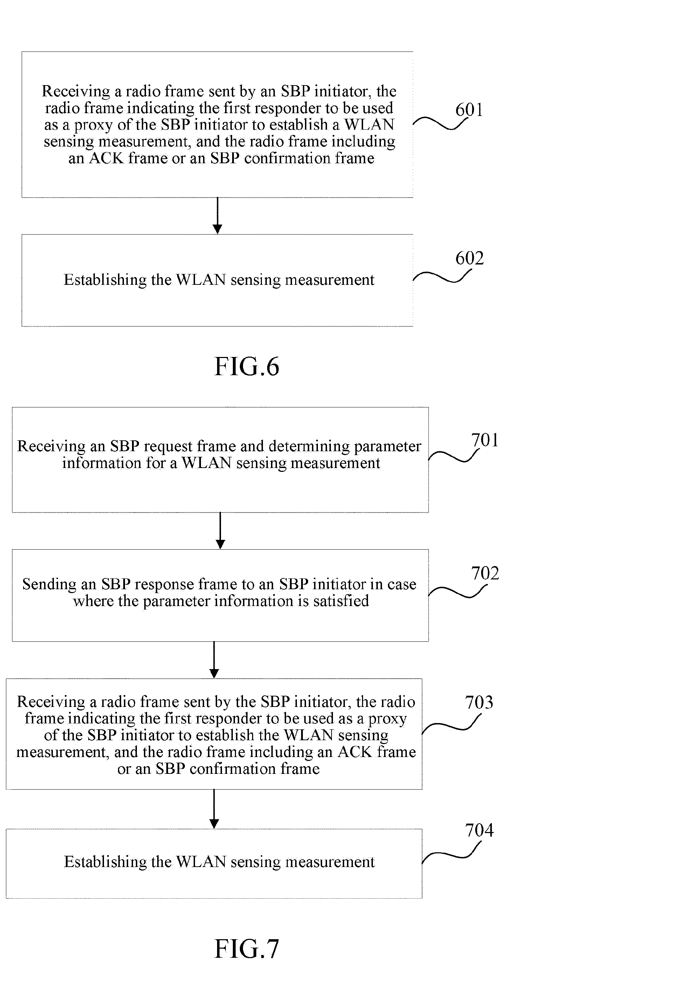

Referring to FIG. 6, an embodiment of the present disclosure provides a sensing by proxy method, performed by a first responder of sensing by proxy (SBP) measurement responders, which may include the following steps.

In step 601, a radio frame sent by an SBP initiator is received, wherein the radio frame indicates the first responder to be used as a proxy of the SBP initiator to establish a wireless local area network (WLAN) sensing measurement, and the radio frame includes an acknowledgement (ACK) frame or an SBP confirmation frame.

A WLAN sensing architecture applied by the communication method provided by the embodiment of the present disclosure and a WLAN sensing process thereof may refer to the aforementioned first example, which will not be repeated herein.

Generally, when acting as a sensing initiator or a sensing transmitter, the STA does not have the capability of communicating with a plurality of receivers at the same time, so it needs a proxy device (for example, an AP) as a proxy of the STA to perform the sensing measurement in order to improve the efficiency of the sensing measurement. In the process of initiating SBP, the SBP initiator sends an SBP request frame (SBP request) to the SBP responder (e.g., an AP). The SBP request frame is a broadcast message frame, and a plurality of SBP responders may receive the SBP request frame, and then respond to the SBP initiator with an SBP response frame.

The SBP initiator, upon receiving SBP response frames sent by at least two of the SBP responders, simply sends the radio frame to one first responder of the at least two of the SBP responders to indicate the first responder to be used as the proxy of the SBP initiator to establish the WLAN sensing measurement. The radio frame includes the ACK frame or the SBP confirmation frame (SBP confirmation).

In this way, after the SBP initiator sends the SBP request frame in the form of broadcasting, a plurality of SBP responders may respond thereto, and the SBP initiator may receive a plurality of SBP response frames. However the SBP initiator only needs one of the SBP responders to establish one SBP, resulting in a large number of invalid SBP response frames and thus a waste of network resources. In addition, if the SBP responder does not receive a confirmation from the SBP initiator after feeding back the SBP response, the SBP responder may consider that the SBP establishment is completed, affecting other subsequent signaling interaction. Therefore, in the embodiment of the present disclosure, the SBP initiator sends the radio frame to one first responder of the SBP responders to establish one SBP process, which avoids the waste due to the invalid message frames, and improves the SBP establishment mechanism to be suitable for the WLAN sensing measurement.

In step 602, the WLAN sensing measurement is established.

After receiving the radio frame, the first responder acts as the proxy of the SBP initiator to establish the WLAN sensing measurement. Specifically, the first responder acts as the SBP proxy to initiate the WLAN sensing measurement, and the initiated WLAN sensing measurement is a triggered based sounding (TB) sensing measurement. The TB sensing measurement is divided into an NDPA sounding (downlink (DL)) sensing and a trigger frame sounding (uplink (UL)) process.

The WLAN sensing process usually includes a triggered based sounding (TB) manner and a Non-TB based sensing manner. Specifically, the TB sensing measurement manner is a manner in which the AP is the initiator or transmitter, and the Non-TB sensing measurement manner is a manner in which the STA is the initiator or transmitter. As a second example, the TB sensing measurement process is illustrated in FIG. 5. FIG. 5 illustrates a plurality of sensing measurement instances of the sensing measurement in the TB sensing measurement process. In examples 1 to 5, each sensing measurement process includes polling, sounding, and reporting (reporting + LTF sec. update) processes. In each example, the sounding may include only NDPA sounding or only TF sounding or both thereof, and the SBP initiator may participate in the NDPA sounding process.

Referring to FIG. 7, an embodiment of the present disclosure provides a sensing by proxy method, optionally the method is performed by a first responder of sensing by proxy (SBP) measurement responders, and the method may include:
step 701, receiving an SBP request frame, and determining parameter information for the WLAN sensing measurement, wherein the parameter information is, for example, a number of spatial streams (NSS), a bandwidth (BW) parameter, the number of STAs participating in the sensing measurement or the like;
step 702, sending an SBP response frame to the SBP initiator in case where the parameter information is satisfied, wherein the SBP responder, when determining that it satisfies the parameter requirement, respond to the SBP initiator with the SBP response frame, and then the SBP initiator selects one of the SBP responders responding with the SBP response frame as the first responder;
step 703, receiving a radio frame sent by the SBP initiator, wherein the radio frame indicates the first responder to be used as a proxy of the SBP initiator to establish a wireless local area network (WLAN) sensing measurement, and the radio frame includes an acknowledgement (ACK) frame or an SBP confirmation frame; and
step 704, establishing the WLAN sensing measurement.

In an optional embodiment, after sending the SBP response frame to the SBP initiator, the method includes:
determining that the radio frame is not received within a second time range; and
terminating an SBP measurement.

There exists the second time range (which may be consistent with the first time range between the SBP request and the SBP response or be SIFS) between the SBP response and the radio frame (SBP confirmation/ACK), and if the SBP confirmation/ACK is not received within the second time range, it identifies that the SBP process is not established.

An embodiment of the present disclosure provides a sensing by proxy method, optionally the method is performed by a first responder of sensing by proxy (SBP) measurement responders, and the method may include:
receiving a radio frame sent by an SBP initiator, wherein the radio frame indicates the first responder to be used as a proxy of the SBP initiator to establish a wireless local area network (WLAN) sensing measurement, and the radio frame includes an acknowledgement (ACK) frame or an SBP confirmation frame; and
establishing the WLAN sensing measurement.

The SBP confirmation frame includes a category field, a public action field, and a dialog token field. As a third example, the format of the SBP confirmation frame is as shown in Table 2 below.

**Table 2:**

| | | |
|---|---|---|
| Category | Public action | Dialog token (Dialog token/MSID) |

A value of the public action field is configured to identify that the radio frame is the SBP confirmation frame.

The dialog token field includes a measurement setup identification (MSID) identification bit and a dialog token identification bit.

The SBP initiator and the SBP responder may establish a plurality of SBP processes at the same time in a very short period of time, so that the dialog token field includes the MSID to identify a corresponding measurement setup. The value in the dialog token identification bit is the same as a dialog token value of the SBP request frame and a dialog token value of an SBP response frame.

In the embodiments of the present disclosure, the radio frame sent by the SBP initiator is received, and the WLAN sensing measurement is established. The radio frame is sent to one first responder of at least two of the SBP responders by the SBP initiator after receiving SBP response frames sent by the at least two of the SBP responders. The SBP initiator sends the radio frame to one first responder of the SBP responders to establish one SBP process, which avoids the waste due to the invalid message frames, and improves the SBP establishment mechanism to be suitable for the WLAN sensing measurement.

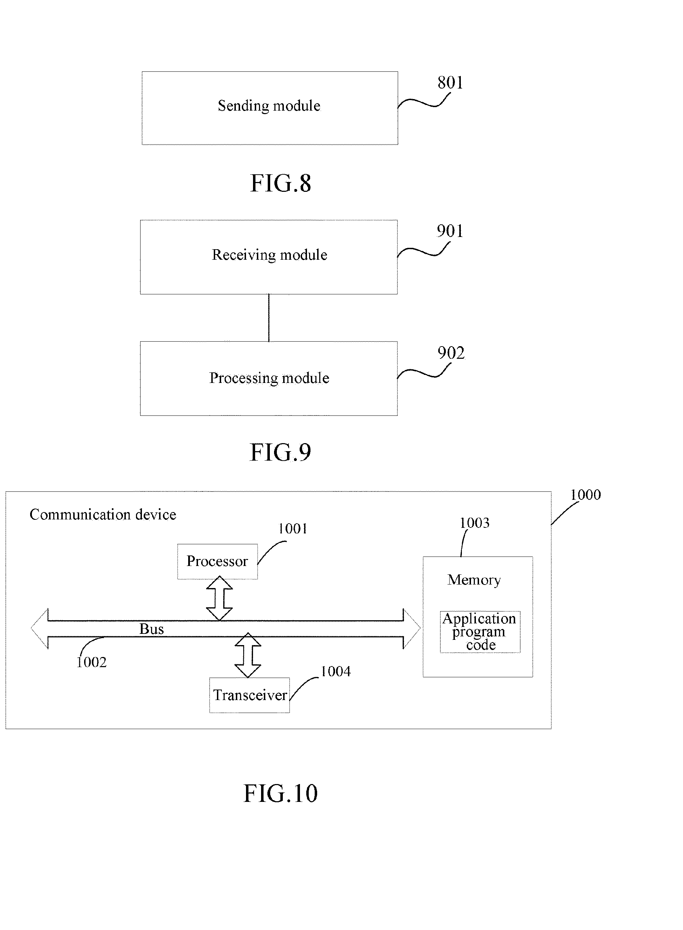

Referring to FIG. 8, based on the same principle as the method provided in the embodiments of the present disclosure, an embodiment of the present disclosure also provides a communication device, including:
a sending module 801, configured to send an SBP request frame to SBP responders; and
the sending module 801 is further configured to send a radio frame to a first responder of the SBP responders, wherein the radio frame indicates the first responder to be used as a proxy of an SBP initiator to establish a wireless local area network (WLAN) sensing measurement, and the radio frame includes an acknowledgement (ACK) frame or an SBP confirmation frame.

In an optional embodiment, the SBP request frame includes parameter information for establishing the WLAN sensing measurement; and
the first responder is an SBP responder that satisfies the parameter information.

In an optional embodiment, the SBP confirmation frame includes a category field, a public action field, and a dialog token field,
a value of the public action field is configured to identify that the radio frame is the SBP confirmation frame, and
the dialog token field includes a measurement setup identification (MSID) identification bit and a dialog token identification bit, and a value in the dialog token identification bit is the same as a dialog token value of the SBP request frame and a dialog token value of an SBP response frame sent by the SBP responder.

In an optional embodiment,
the communication device includes:
a receiving module, configured to determine that an SBP response frame is not received within a first time range; and
a processing module, configured to terminate an SBP measurement.

In the embodiments of the present disclosure, the sending module 801 sends the SBP request frame to the SBP responders, and then further sends the radio frame to one first responder of the SBP responders to establish one SBP process, which avoids waste due to invalid message frames and improves the SBP establishment mechanism to be suitable for the WLAN sensing measurement. The embodiments of the present disclosure provide a way of establishing the SBP process between the SBP initiator and the SBP responder.

Referring to FIG. 9, based on the same principle as the method provided in the embodiments of the present disclosure, an embodiment of the present disclosure also provides a communication device, including:
a receiving module 901, configured to receive a radio frame sent by an SBP initiator, wherein the radio frame indicates a first responder to be used as a proxy of the SBP initiator to establish a wireless local area network (WLAN) sensing measurement, and the radio frame includes an acknowledgement (ACK) frame or an SBP confirmation frame; and
a processing module 902, configured to establish the WLAN sensing measurement.

In an optional embodiment,
the receiving module 901 is further configured to receive an SBP request frame;
the processing module 902 is further configured to determine parameter information for the WLAN sensing measurement; and
the device further includes: a sending module, configured to send an SBP response frame to the SBP initiator in a case where the parameter information is satisfied.

In an optional embodiment, the communication device includes:
the receiving module 901, further configured to determine that the radio frame is not received within a second time range; and
the processing module 902, further configured to terminate an SBP measurement.

In an optional embodiment, the SBP confirmation frame includes a category field, a public action field, and a dialog token field,
a value of the public action field is configured to identify that the radio frame is the SBP confirmation frame, and
the dialog token field includes a measurement setup identification (MSID) identification bit and a dialog token identification bit, and a value in the dialog token identification bit is the same as a dialog token value of the SBP request frame and a dialog token value of the SBP response frame.

In the embodiments of the present disclosure, the receiving module 901 receives the radio frame sent by the SBP initiator, and the processing module 902 establishes the WLAN sensing measurement. The radio frame is sent to one first responder of at least two of the SBP responders by the SBP initiator after receiving SBP response frames sent by the at least two of the SBP responders. The SBP initiator sends the radio frame to one first responder of the SBP responders to establish one SBP process, which avoids the waste due to the invalid message frames, and improves the SBP establishment mechanism to be suitable for the WLAN sensing measurement.

In an optional embodiment, an embodiment of the present disclosure further provides a communication device, and as shown in FIG. 10, the communication device 1000 shown in FIG. 10 may be a server, which includes a processor 1001 and a memory 1003. The processor 1001 and the memory 1003 are connected, e.g., via a bus 1002. Optionally, the communication device 1000 may also include a transceiver 1004. It is to be noted that in practical application, the number of the transceiver 1004 is not limited to one, and the structure of the communication device 1000 does not limit the embodiments of the present disclosure.

The processor 1001 may be a CPU (Central Processing Unit), a general-purpose processor, a DSP (Digital Signal Processor), an ASIC (Application Specific Integrated Circuit), FPGA(Field Programmable Gate Array) or other programmable logic device, a transistor logic device, a hardware component, or any combination thereof. It may implement or execute various exemplary logic blocks, modules, and circuits described in conjunction with the present disclosure. The processor 1001 may also be a combination that implements computing functions, such as a combination including one or more microprocessor, a combination of a DSP and a microprocessor, and the like.

The bus 1002 may include a path for transferring information between the components described above. The bus 1002 may be a PCI (Peripheral Component Interconnect) bus, an EISA (Extended Industry Standard Architecture) bus or the like. The bus 1002 may be divided into an address bus, a data bus, a control bus or the like. For ease of representation, only one thick line is shown in FIG. 10, which however does not mean that there is only one bus or one type of bus.

The memory 1003 may be a ROM (Read Only Memory) or other type of static memory device that can store static information and instructions, and a RAM (Random Access Memory) or other type of dynamic memory device that can store information and instructions, or may also be an EEPROM (Electrically Erasable Programmable Read Only Memory), CD-ROM (Compact Disc Read Only Memory) or other optical disk storage, optical disc storage (including compressed optical discs, laser discs, compact discs, digital general purpose discs, Blu-ray discs, etc.), magnetic disk storage media, other magnetic storage devices, or any other media capable of carrying or storing expected program codes having instruction or data structure form and capable of being accessed by a computer, which is not specifically limited herein.

The memory 1003 is used to store application program codes for executing the solution of the present disclosure and is controlled and executed by processor 1001. The processor 1001 is used to execute the application program codes stored in the memory 1003 to implement that shown in the above method embodiments.

The communication device includes, but is not limited to: a mobile terminal such as a mobile phone, a laptop computer, a digital broadcast receiver, a PDA (personal digital assistant), a PAD (portable Android device), a PMP (portable multimedia player), an in-vehicle terminal (such as in-vehicle navigation terminal), or the like; and a fixed terminal such as a digital TV, a desktop computer, or the like. The communication device shown in FIG. 10 is merely an example and should not impose any limitation on the functionality and application scope of the embodiments of the present disclosure.

The server provided in the present disclosure may be a standalone physical server, may be a server cluster or a distributed system formed by a plurality of physical servers, or may also be a cloud server providing basic cloud computing services such as cloud services, cloud databases, cloud computation, cloud functions, cloud storage, network services, cloud communications, middleware services, domain name services, security services, CDNs, and big data and artificial intelligence platforms. The terminals may be smartphones, tablets, laptops, desktop computers, smart speakers, smart watches, and the like, but are not limited thereto. The terminal and the server may be connected directly or indirectly via wired or wireless communication, which is not limited in the present disclosure.

An embodiment of the present disclosure provides a computer-readable storage medium having a computer program stored thereon which, when runs on a computer, enables the computer to execute that in the above method embodiments.

It is to be understood that although the individual steps in the flowchart of the accompanying drawings are shown in sequence as indicated by the arrows, the steps are not necessarily executed sequentially in the order indicated by the arrows. Unless expressly stated herein, the execution of these steps is not strictly limited in order, and they may be executed in other orders. Moreover, at least a portion of the steps in the flowchart of the accompanying drawings may include a plurality of sub-steps or a plurality of phases, which are not necessarily executed or completed at the same moment but may be executed at different moments, and they may not be executed sequentially, but may be executed in turn or alternately with the other steps or at least a portion of sub-steps or phases of the other steps.

It is to be noted that the computer-readable medium described above in the present disclosure may be a computer-readable signal medium or a computer-readable storage medium or any combination thereof. The computer-readable storage medium may be but is not limited to for example a system, device, or element of electricity, magnetism, light, electromagnetism, infrared ray, or semiconductor, or any combination thereof. More specific examples of the computer-readable storage media may include, but are not limited to: an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium containing or storing a program that may be used by or in combination with an instruction-executing system, device, or element. And in the present disclosure, the computer-readable signal medium may include a data signal propagated in a baseband or as part of a carrier carrying computer-readable program code. Such propagated data signals may take a variety of forms, including, but not limited to, electromagnetic signals, optical signals, or any suitable combination thereof. The computer-readable signal medium may also be any computer-readable medium other than the computer-readable storage medium that may send, propagate, or transmit a program for use by or in conjunction with an instruction-executing system, device, or element. The program code contained on the computer-readable medium may be transmitted using any suitable medium, including, but not limited to: wire, optical cable, RF (Radio Frequency), or the like, or any suitable combination thereof.

The above computer-readable medium may be contained in the above communication device; or may exist separately and not be assembled into the communication device.

The above computer-readable medium carries one or more programs that, when being executed by the communication device, cause the communication device to perform the method in the above embodiments.

According to an aspect of the present disclosure, there is provided a computer program product or computer program including computer instructions which are stored in a computer-readable storage medium. A processor of a computer device reads the computer instructions from the computer-readable storage medium, and the processor executes the computer instructions such that the computer device performs the method provided in the various optional implementations described above.

The computer program code for performing the operations of the present disclosure may be written in one or more programming languages or combinations thereof, including object-oriented programming languages - such as Java, Smalltalk, C++ - and conventional procedural programming languages - such as the 'C' language or similar programming languages. The program code may be executed entirely on a user computer, executed partially on the user computer, executed as a stand-alone software package, executed partially on the user computer and partially on a remote computer, or executed entirely on a remote computer or server. In the case of the remote computer, the remote computer may be connected to the user computer via any kind of network, including a local area network (LAN) or a wide area network (WAN), or may be connected to an external computer (e.g., by using the Internet of an Internet service provider).

The flowcharts and block diagrams in the accompanying drawings illustrate the system architecture, functionality, and operation that may be implemented by the systems, methods, and computer program products according to various embodiments of the present disclosure. In this regard, each block in the flowcharts or block diagrams may represent a module, program segment, or portion of code that contains one or more executable instructions for implementing a specified logical function. It is also to be noted that in some alternative implementations, the functions indicated in the blocks may also occur in a different order than that indicated in the accompanying drawings. For example, two consecutively represented blocks may actually be executed substantially in parallel, and they may sometimes be executed in a reverse order, depending on the function involved. It is also to be noted that each block in the block diagrams and/or flowcharts, and a combination of the blocks in the block diagrams and/or flowcharts, may be implemented with a dedicated hardware-based system that performs a specified function or operation, or may be implemented with a combination of dedicated hardware and computer instructions.

The modules involved in the description of the embodiments of the present disclosure may be implemented by way of software or may be implemented by way of hardware. The name of a module does not constitute a limitation on the module in some cases, for example, a module A may also be described as "a module A for performing an operation B".

The above description is only a preferred embodiment of the present disclosure and an illustration of the technical principle applied. A person skilled in the art should understand that the scope of the present disclosure is not limited to a technical solution formed by a particular combination of the above-described technical features, but also covers other technical solutions formed by any combination of the above-described technical features or their equivalents without departing from the above-described concept of the present disclosure, for example, a technical solution formed by replacing the above features with technical features having similar functions to that disclosed in the present disclosure (which however not limited thereto).

## Claims

1. A method for sensing by proxy, performed by a sensing by proxy, SBP, measurement initiator, comprising:
sending an SBP request frame to SBP responders; and
sending a radio frame to a first responder of the SBP responders, wherein the radio frame indicates the first responder to be used as a proxy of an SBP initiator to establish a wireless local area network, WLAN, sensing measurement, and the radio frame comprises an acknowledgement, ACK, frame or an SBP confirmation frame.

2. The method according to claim 1, wherein
the SBP request frame comprises parameter information for establishing the WLAN sensing measurement; and
the first responder is an SBP responder that satisfies the parameter information.

3. The method according to claim 1, wherein
the SBP confirmation frame comprises a category field, a public action field, and a dialog token field,
a value of the public action field is configured to identify that the radio frame is the SBP confirmation frame, and
the dialog token field comprises a measurement setup identification, MSID, identification bit and a dialog token identification bit, and a value in the dialog token identification bit is the same as a dialog token value of the SBP request frame and a dialog token value of an SBP response frame sent by the SBP responder.

4. The method according to claim 1, further comprising, after sending the SBP request frame to the SBP responders:
determining that an SBP response frame is not received within a first time range; and
terminating an SBP measurement.

5. A method for sensing by proxy, performed by a first responder of sensing by proxy, SBP, measurement responders, comprising:
receiving a radio frame sent by an SBP initiator, wherein the radio frame indicates the first responder to be used as a proxy of the SBP initiator to establish a wireless local area network, WLAN, sensing measurement, and the radio frame comprises an acknowledgement, ACK, frame or an SBP confirmation frame; and
establishing the WLAN sensing measurement.

6. The method according to claim 5, further comprising:
receiving an SBP request frame;
determining parameter information for the WLAN sensing measurement; and
sending an SBP response frame to the SBP initiator in response to determining that the parameter information is satisfied.

7. The method according to claim 6, comprising, after sending the SBP response frame to the SBP initiator:
determining that the radio frame is not received within a second time range; and
terminating an SBP measurement.

8. The method according to claim 6, wherein
the SBP confirmation frame comprises a category field, a public action field, and a dialog token field,
a value of the public action field is configured to identify that the radio frame is the SBP confirmation frame, and
the dialog token field comprises a measurement setup identification, MSID, identification bit and a dialog token identification bit, and a value in the dialog token identification bit is the same as a dialog token value of the SBP request frame and a dialog token value of the SBP response frame.

9. A communication device, comprising:
a sending module, configured to send an SBP request frame to SBP responders; and
the sending module is further configured to send a radio frame to a first responder of the SBP responders, wherein the radio frame indicates the first responder to be used as a proxy of an SBP initiator to establish a wireless local area network, WLAN, sensing measurement, and the radio frame comprises an acknowledgement, ACK, frame or an SBP confirmation frame.

10. The communication device according to claim 9, wherein
the SBP request frame comprises parameter information for establishing the WLAN sensing measurement; and
the first responder is an SBP responder that satisfies the parameter information.

11. The communication device according to claim 9, wherein
the SBP confirmation frame comprises a category field, a public action field, and a dialog token field,
a value of the public action field is configured to identify that the radio frame is the SBP confirmation frame, and
the dialog token field comprises a measurement setup identification, MSID, identification bit and a dialog token identification bit, and a value in the dialog token identification bit is the same as a dialog token value of the SBP request frame and a dialog token value of an SBP response frame sent by the SBP responder.

12. The communication device according to claim 9, comprising:
a receiving module, configured to determine that an SBP response frame is not received within a first time range; and
a processing module, configured to terminate an SBP measurement.

13. A communication device, comprising:
a receiving module, configured to receive a radio frame sent by an SBP initiator, wherein the radio frame indicates a first responder to be used as a proxy of the SBP initiator to establish a wireless local area network, WLAN, sensing measurement, and the radio frame comprises an acknowledgement, ACK, frame or an SBP confirmation frame; and
a processing module, configured to establish the WLAN sensing measurement.

14. The communication device according to claim 13, wherein
the receiving module is further configured to receive an SBP request frame;
the processing module is further configured to determine parameter information for the WLAN sensing measurement; and
the device further comprises:
a sending module, configured to send an SBP response frame to the SBP initiator in response to determining that the parameter information is satisfied.

15. The communication device according to claim 14, wherein
the receiving module is further configured to determine that the radio frame is not received within a second time range; and
the processing module is further configured to terminate an SBP measurement.

16. The communication device according to claim 14, wherein
the SBP confirmation frame comprises a category field, a public action field, and a dialog token field,
a value of the public action field is configured to identify that the radio frame is the SBP confirmation frame, and
the dialog token field comprises a measurement setup identification, MSID, identification bit and a dialog token identification bit, and a value in the dialog token identification bit is the same as a dialog token value of the SBP request frame and a dialog token value of the SBP response frame.

17. A communication device, comprising a memory, a processor and a computer program stored in the memory and runnable on the processor, wherein the processor, when executing the program, implements the method according to any one of claims 1 to 8.

18. A computer-readable storage medium having a computer program stored thereon, wherein the computer program, when being executed by a processor, implements the method according to any one of claims 1 to 8.
